# EUROPEAN PATENT SPECIFICATION

(11) **EP 0 627 187 B1**
(45) Date of publication and mention of the grant of the patent: **05.03.1997**
(21) Application number: 94201539.7
(22) Date of filing: 31.05.1994
(51) Int. Cl.: A47J 31/40

(54) **Method and device for preparing an extract from an extractable starting material**
Verfahren und Vorrichtung zur Bereitung eines Extrakts aus einem extraktierbaren Ausgangsmaterial
Procédé et dispositif à préparer un extrait à base d'un matériau extractible

(30) Priority: 03.06.1993 NL 9300951
(43) Date of publication of application: 07.12.1994
(73) Proprietor: MAAS MECHATRONICS B.V., NL-5692 EB Son en Breugel (NL)
(72) Inventor: Hendriks, Joris Gerardus, NL-5691 MK Son (NL)
(74) Representative: Timmermans, Anthonius C.Th., Ir.

(56) References cited:
- EP-A- 0 250 810
- EP-A- 0 299 399
- EP-A- 0 486 433
- EP-A- 0 528 757
- EP-A- 0 528 759
- WO-A-88/02612
- WO-A-91/01673
- GB-A- 2 019 202
- NL-A- 8 104 990
- US-A- 3 426 670

## Description

The present invention relates to a method for preparing an extract from an extractable material under exertion of air pressure, whereby vertical side walls are erected around a filter so as to form a preparation chamber in which the extractable material is deposited, subsequent to which a first dose of liquid is added from a spray duct to the extractable material, which liquid is in particular water, after which a second dose of liquid is added from the spray duct to the extractable material and is caused to pass through the extractable material and the filter under exertion of air pressure so as to form the extract, whereby the spray duct is located at the upper side of the preparation chamber and the filter is located at the lower side of the preparation chamber.

The invention also relates to a device for performance of the said method.

Such a method and device for preparing an extract, particularly a method or device for the preparation of, for example, coffee, tea, etc, are generally known.

In the known method for preparation of coffee, tea or some other extract with the aid of the known device, water is forced under the influence of pressure through the extractable starting material, which comprises ground coffee or tea leaves, for example. The extract, which is generally captured in a beaker, subsequently constitutes the desired preparation.

It is generally desirable that a qualitatively acceptable cup of coffee be preparable within an acceptable span of time (particularly from the point of view of a waiting customer) and making use of a minimum quantity of ground coffee, so as to be able to provide a finished product at minimal cost price.

The known method and device for preparing an extract from an extractable starting material do not satisfy this requirement to an acceptable extent.

From the Dutch patent application NL-A-8104990 a method and device are known for preparing an extract from an extractable starting material, having several parts which can be moved relative to each other.

From the American patent US-A-3,426,670 also a method and device are known for preparing an extract from an extractable material having also several parts which, during operation of the device, are moved relatively to each other.

It is an objective of the invention to provide a method and a compact and easily disassembled device by means of which an extract can be obtained from an extractable starting material, without detrimental effect on the quality of the prepared extract.

It is a further object of the present invention to provide a method and device that are capable to withstand higher pressures than the prior art devices.

To this end, the method according to the invention, is characterized in that the spray duct and the filter are both only movable in horizontal direction respectively and the vertical side walls are only movable in vertical direction.

An embodiment of the method according to the invention is characterized in that the preparation chamber is formed by moving the side walls in the form of a cylinder upwards to the spray duct.

A further embodiment of the method according to the invention is characterized in that the cylinder is movable around a piston having at its upper side the filter.

In accordance with a further embodiment of the method according to the invention, it is preferable to lower the side walls once preparation has been completed, and to subsequently rid the filter of the remaining substance in a simple manner, whereby occurrence of any significant fungus growth on the remaining substance is prevented from causing contamination of any subsequent extract.

In accordance with the invention, the device for preparing an extract from an extractable material comprises a hollow piston having a filter at its upper side and a cylinder having a vertical axis, said cylinder surrounding the piston, a sealing portion being provided with a spray duct which emerges into a preparation chamber collectively formed by the piston and the cylinder, whereby the spray duct is located at the upper side of the preparation chamber and the filter is located at the lower side of the preparation chamber, characterized in that the cylinder is only movable in vertical direction and the piston with the filter and the sealing portion with the spray duct are only movable in horizontal direction, respectively.

In order to achieve an inventive device which is compact and can be constructed in a simple manner from a minimum number of components, the piston is preferably arranged so as to be fixed, whereby it is particularly preferable to arrange the cylinder in such a manner with respect to the piston that it can be longitudinally displaced with respect thereto, and is in particular longitudinally slideable with respect thereto.

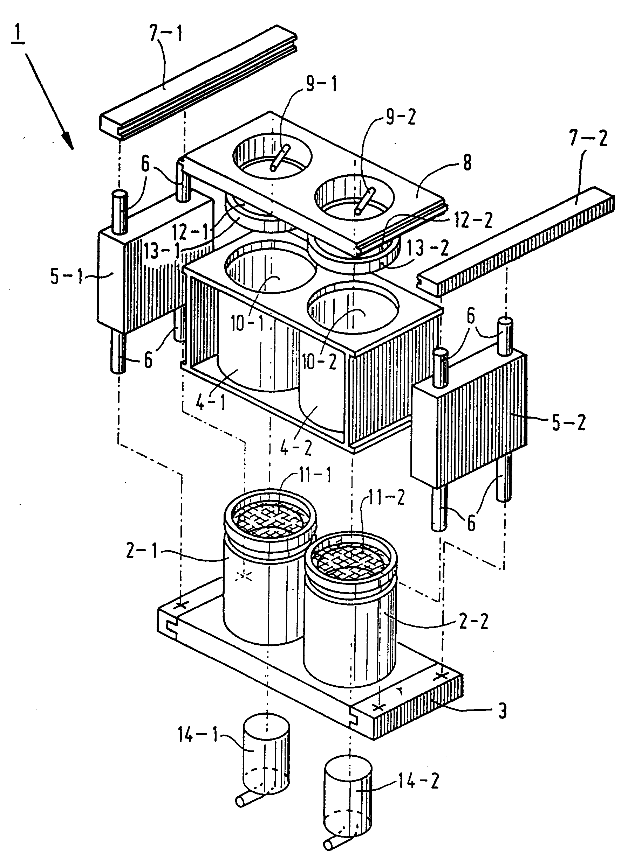

The method and device for preparing the extract, together with further advantages associated therewith, will be further elucidated with the aid of the accompanying drawing. The figure depicts a particular preferential embodiment of the device concerned.

The figure depicts a device 1, which can be included in a coffee, tea, soup or cocoa maker, for example, with the aid of which device an extract is obtained from an extractable starting material, which material often comprises a ground material or, for example, a mixture of herbs. The device 1, which in the depicted configuration is embodied in duplicate, comprises a piston-pair 2-1, 2-2, which piston-pair 2-1, 2-2 is mounted in a carrier portion of a carrier 3, which carrier portion can, if so desired, be transversely slid with respect to the carrier 3. The pistons 2-1, 2-2 are movably mounted with respect to a cylinder (or cylinder-pair) 4-1, 4-2, which in this embodiment is embodied so as to be slideable. The cylinder-pair 4-1, 4-2 is moveable by means of cylinder guide means 5-1, 5-2 which are mounted aside the cylinder pair 4-1, 4-2. In the depicted embodiment, the cylinder guide means 5-1, 5-2 can be longitudinally displaced along rods 6. The rods 6 are fixed at one extremity to the carrier 3 and are fixed at the other extremity to guide means 7-1, 7-2 which have yet to be elucidated. The actual movement of the cylinder block 4-1, 4-2 along the rods 6 occurs with the aid of means which will not be further elucidated but which may be electrically, pneumatically or hydraulically embodied. The device 1 additionally comprises a sealing portion 8, which in the depicted embodiment is mounted between the guide means 7-1, 7-2 so that it can be transversely displaced. A spray duct (or spray duct pair) 9-1, 9-2 is located in the sealing portion, which spray ducts emerge respectively into a preparation chamber 10-1, 10-2 which is formed within the cylinders 4-1, 4-2. The pistons 2-1, 2-2 are embodied so as to be hollow, and are provided at their respective upper sides with filters 11-1, 11-2.

The operation of the device 1 is as follows. At the beginning of the extraction cycle, the piston 2-1, 2-2 is located entirely within the cylinder 4-1, 4-2, and the sealing portion is located in the non-depicted backwardly-slid position. When the preparation process is initiated, the cylinder-pair is raised to a certain height, thereby causing formation of a preparation chamber 10-1, 10-2 into which an extractable starting material is subsequently brought via non-depicted means. The sealing portion 8 is then slid forward, after which the cylinder 10-1, 10-2 is pushed somewhat further upward, as a consequence of which the spray duct 9-1, 9-2 falls within the preparation chamber 10-1, 10-2. While the cylinder is in this position, a very small dose of liquid (generally (warm) water) is sprayed into the preparation chamber 10-1, 10-2 by means of the spray duct 9-1, 9-2. Subsequently, the cylinder 4-1, 4-2 is moved still further upward, so that seals 12-1, 12-2, which are fitted around respective collars 13-1, 13-2 mounted on the sealing portion 8, completely seal off the preparation chamber 10-1, 10-2. Thereafter, the substance formed by combination of the extractable starting material with the dose of water is given the opportunity to swell for some time, during which swelling process external air which has permeated the filter is given the opportunity to enter into the preparation chamber 10-1, 10-2. Such entrance of air causes a certain whirling of the substance present in the preparation chamber 10-1, 10-2 and often also present on the filter 11-1, 11-2. After completion of the swelling process, a second dose of liquid is administered to the closed preparation chamber 10-1, 10-2 via the spray duct 9-1, 9-2, subsequent to which, under the influence of air pressure, the liquid is pressed through the substance and the filter 11-1, 11-2 on the hollow-embodied piston 2-1, 2-2 towards non-depicted removal means from which the prepared extract can be tapped. If so desired, remaining moist air in the preparation chamber 10-1, 10-2 can be expelled (i.e. sucked out) subsequent to opening the preparation chamber 10-1, 10-2, such expulsion occurring using non-depicted air expelling means which are fitted, for example, in the sealing portion 8 of the cylinder wall. At a later stage, non-depicted cleaning means ensure that the filter 11-1, 11-2 is wiped clean.

If so desired, respective expansion means 14-1, 14-2 can be mounted in or near to the piston 2-1, 2-2, in order to ensure that the extract flows in a steady and even manner from the previously cited removal means. If so desired, the filter 11-1, 11-2, which is embodied so as to be removable, can be combined with non-depicted sealing means. In that case, the combination of filter and sealing means is removable as a single entity. By ensuring that pistons and cylinders are moveable with respect to one another in a practically air-tight and water-tight manner, the present device 1 can also achieve the preparation of good espresso coffee, for which attainment of higher pressures is important. Moreover, the cited sealing means function as a scraping facility, thereby serving to keep the internal wall of the cylinder 4-1, 4-2 clean.

It goes without saying that the various components hereabove referred to are easily removed and/or disassembled, and are easily accessible so as to allow necessary periodic maintenance to be speedily performed.

## Claims

1. Method for preparing an extract from an extractable material under exertion of air pressure, whereby vertical side walls (4) are erected around a filter (11) so as to form a preparation chamber (10) in which the extractable material is deposited, subsequent to which a first dose of liquid is added from a spray duct (9) to the extractable material, which liquid is in particular aqueous, after which a second dose of liquid is added from the spray duct (9) to the extractable material and is caused to pass through the extractable material and the filter (11) under exertion of air pressure so as to form the extract, whereby the spray duct (9) is located at the upper side of the preparation chamber (10) and the filter (11) is located at the lower side of the preparation chamber (10) characterized in that the spray duct (9) and the filter (11) are both only movable in horizontal direction, respectively, and the vertical side walls (4) are only movable in vertical direction.

2. Method according to claim 1, characterized in that the preparation chamber (10) is formed by moving the side walls in the form of a cylinder (4) upwards to the spray duct (9).

3. Method according to claim 2, characterized in that the cylinder (4) is movable around a piston (2) having at its upper side the filter (11).

4. Method according to any of the claims 1-3, whereby air which has permeated the filter (11) is admitted to the preparation chamber (10) intermediate to the times at which the aqueous liquid is administered.

5. Method according to any of the claims 1-4, whereby the air in the preparation chamber (10) is expelled subsequent to preparation of the extract.

6. Method according to any of the claims 2-5, whereby the cylinder (4) is lowered once preparation has been completed, and the filter (11) is rid of the remaining substance.

7. Device for preparing an extract from an extractable material under exertion of air pressure, which device comprises a hollow piston (2) having a filter (11) at its upper side and a cylinder (4) having a vertical axis, said cylinder (4) surrounding the piston (2), a sealing portion (8) being provided with a spray duct (9) which emerges into a preparation chamber (10) collectively formed by the piston (2) and the cylinder (4), whereby the spray duct (9) is located at the upper side of the preparation chamber (10) and the filter (11) is located at the lower side of the preparation chamber (10), characterized in that the cylinder (4) is only movable in vertical direction, and the piston (2) with the filter (11) and the sealing portion (8) with the spray duct (9) are only movable in horizontal direction, respectively.

8. Device according to claim 7, whereby the piston (2) is mounted to a carrier (3) which can be transversely displaced.

9. Device according to claim 7 or 8, whereby the sealing portion (8) is provided with a collar (13), which collar is fitted to the cylinder head so as to be sealing and yet detachable.

10. Device according to any of the claims 7-9, whereby expansion means (14) are located in the hollow piston (2), which expansion means are connected to the preparation chamber (10).

11. Device according to any of the claims 7-10, whereby the device is embodied in plurality, and in particular in duplicate.

## Patentansprüche

1. Verfahren zur Bereitung eines Extrakts aus einem zu extrahierenden Material unter Anwendung von Luftdruck, wobei senkrechte Seitenwände [4] in derartiger Weise um einen Filter [11) angebracht werden, daß eine Präparat-Kammer [10] gebildet wird, in die das zu extrahierende Material eingesetzt wird, wonach eine erste Dosis Flüssigkeit insbesondere eine wäßrige Flüssigkeit über ein Sprührohr [9] dem zu extrahierenden Material zugeführt wird, wonach eine zweite Dosis Flüssigkeit über das Sprührohr [9] dem zu extrahierenden Material zugeführt wird, und danach durch Luftdruck gezwungen wird durch das zu extrahierende Material und das Filter [11] zu fließen, um somit das Extrakt zu bilden, wobei das Sprührohr [9] an der Oberseite der Präparatkammer 10] und das Filter [11] an der Unterseite der Präparatkammer [10] angebracht ist, dadurch gekennzeichnet, daß das Sprührohr [9] und das Filter [11] beide jeweils nur in waagerechter Richtung zu bewegen sind und daß die senkrechten Seitenwände [4] nur in der senkrechten Richtung zu bewegen sind.

2. Verfahren nach Anspruch 1, dadurch gekennzeichnet, daß die Präparatkammer [10] gebildet wird, indem die Seitenwände [4] in Form eines Zylinders nach oben zum Sprührohr [9] hin bewegt werden.

3. Verfahren nach Anspruch 2, dadurch gekennzeichnet, daß der Zylinder [4] um einen Kolben [2] bewegen kann, der an der Oberseite das Filter [11] trägt.

4. Verfahren nach jedem der Ansprüche 1 bis einschließlich 3, wobei Luft, die durch das Filter [4] gedrungen ist, in die Präparatkammer [10] zwischen den Zeitpunkten der Zufuhr der wäßrigen Flüssigkeit eingelassen wird.

5. Verfahren nach jedem der Ansprüche 1 bis einschließlich 4, wobei die Luft in der Präparatkammer [10] nach dem bereiten des Extrakts vertrieben wird.

6. Verfahren nach jedem der Ansprüche 2 bis einschließlich 5, wobei der Zylinder [4] nach unten bewegt wird, wenn die Bereitung abgeschlossen ist und das Filter [11] von dem zurückgebliebenen Rückstand befreit worden ist.

7. Gerät für die Bereitung eines Extrakts aus einem zu extrahierenden Material unter Anwendung von Luftdruck, welches Gerät einen Hohlkolben [2] enthält, der an der Oberseite mit einem Filter [11] versehen ist, und einen Zylinder [4] [mit senkrechter Achse], der den besagten Kolben [2] umschließt, wobei der besagte Zylinder [4] ein Abschlußelement enthält, in dem sich ein Sprührohr [9] befindet, das in eine Präparatkammer [10] mündet, die von dem Kolben [2] und dem Zylinder [4] gemeinsam gebildet wird, wobei das Sprührohr [9] sich an der Oberseite der Präparatkammer [10] und das Filter [4] sich an der Unterseite der Präparatkammer [10] befindet, dadurch gekennzeichnet, daß der Zylinder [4] nur in senkrechter Richtung bewegt werden kann und der Kolben [2] mit dem Filter [4] und dem Abschlußelement [8] mit dem Sprührohr [9] nur in waagerechter Richtung bewegt werden kann.

8. Gerät nach Anspruch 7, wobei der Kolben [2] auf einem Träger [3] angebracht ist, der in Querrichtung bewegt werden kann.

9. Gerät nach Anspruch 7 oder 8, wobei der Abschlußteil [8] mit einem Kragen [13] an dem Zylinderkopf versehen ist, der für den Abschluß Sorge trägt, während das Ganze trotzdem lösbar bleibt.

10. Gerät nach jedem der Ansprüche 7 bis einschließlich 9, wobei Expansionsmittel [14] in dem Hohlkolben [2] vorhanden sind, die mit der Präparatkammer [10] verbunden sind.

11. Gerät nach jedem der Ansprüche 7 bis einschließlich 10, wobei das Gerät in mehrfacher Ausführung und insbesondere in zweifacher Ausführung ausgeführt ist.

## Revendications

1. Méthode pour la préparation d'un extrait sous pression d'air partant d'un produit de base à extraire, où des parois latérales verticales (4) sont placées autour d un filtre (11) de façon qu une chambre de préparation (10) soit formée dans laquelle le produit à extraire est placée, après quoi une première dose de liquide, notamment un liquide aqueux, est ajoutée au produit à extraire à travers un conduit à pulvérisation (9), après quoi une deuxième dose de liquide est ajoutée au produit à extraire à travers le conduit à pulvérisation (9) laquelle est ensuite forcée sous pression d'air de couler à travers le produit à extraire et le filtre (11) afin de former l'extrait, dans le cas où le conduit à pulvérisation (9) se trouve au-dessus de la chambre de préparation (10) et le filtre (11) se trouve au-dessous de la chambre de préparation, ayant comme caractéristique que le conduit à pulvérisation (9) et le filtre (11) ne peuvent se mouvoir qu'horizontalement, et les parois latérales verticales (4) ne peuvent se mouvoir que verticalement.

2. Méthode selon la revendication 1, caractérisée par la formation de la chambre de préparation (10) en mouvant les parois latérales (4), sous forme de cylindre, vers le haut et le conduit à pulvérisation (9).

3. Méthode selon la revendication 2, caractérisée par la mobilité du cylindre (4) autour d'un piston (2) ayant un filtre (11) au-dessus.

4. Méthode selon chacune des revendications de 1 à 3, où l'air pénétré à travers le filtre (11) est admis d'entrer dans la chambre de préparation (10) entre l'addition de la première et de la deuxième dose de liquide aqueux.

5. Méthode selon chacune des revendications de 1 à 4, où l'air présent dans la chambre de préparation (10) est éliminé après la préparation de l'extrait.

6. Méthode selon chacune des revendications de 2 à 5, où le cylindre (4) est déplacé vers le bas une fois la préparation finie et le filtre (11) débarrassé du résidu.

7. Appareil pour la préparation d'un extrait sous pression d'air partant d'un produit à extraire, pourvu d'un piston vide (2) ayant un filtre (11) au-dessus, un cylindre (4) (à axe vertical) entourant le piston (2), dans le cas où ledit cylindre (4) contient un élément de fermeture avec un conduit à pulvérisation (9) dedans qui débouche dans la chambre de préparation (10), laquelle est formée par le piston (2) et le cylindre (4), où le conduit à pulvérisation (9) se trouve au-dessus de la chambre de préparation (10), et le filtre (11) se trouve au-dessous de la chambre de préparation (10), avec le caractéristique que le cylindre (4) ne peut se mouvoir que verticalement et que le piston (2) avec le filtre (11) et l élément de fermeture (8) avec le conduit à pulvérisation (9) ne peuvent se mouvoir qu'horizontalement.

8. Appareil selon la revendication 7, dans le cas où le piston (2) est fixé sur un support (3) qui peut être déplacé transversalement.

9. Appareil selon la revendication 7 ou 8, dans le cas où l'élément de fermeture (8) est pourvu d'un bord (13) en tête du cylindre bouchant ainsi l'ensemble qui reste néanmoins démontable.

10. Appareil selon chacune des revendications de 7 à 9, où il y a des moyens d'expansion (14) dans le piston vide (2) qui sont reliés à la chambre de préparation (10).

11. Appareil selon chacune des revendications de 7 à 10, dans le cas d'une version multiple de l'appareil et plus précisément dans le cas d'une version en double.
